# NEUE EUROPÄISCHE PATENTSCHRIFT

(11) **EP 0 895 889 B2**
(45) Veröffentlichungstag und Bekanntmachung des Hinweises auf die Entscheidung über den Einspruch: **03.07.2013**
(45) Hinweis auf die Patenterteilung: 24.09.2003
(21) Anmeldenummer: 98112925.7
(22) Anmeldetag: 11.07.1998
(51) Int. Cl.: B60J 7/22

(54) **Cabriofahrzeug**
Convertible vehicle
Véhicule convertible

(30) Priorität: 07.08.1997 DE 19734249
(43) Veröffentlichungstag der Anmeldung: 10.02.1999
(73) Patentinhaber: SCAMBIA Industrial Developments Aktiengesellschaft, 9494 Schaan (LI)
(72) Erfinder: Kleb, Emmerich, 71606 Markgröningen (DE); Riehle, Hans, 71638 Ludwigsburg (DE)
(74) Vertreter: Hoeger, Stellrecht & Partner Patentanwälte

(56) Entgegenhaltungen:
- EP-A- 0 779 172
- DE-A- 3 833 046
- DE-A- 19 705 682
- DE-C- 1 008 592
- GB-A- 2 225 992
- US-A- 3 727 973
- US-A- 4 538 852

## Beschreibung

Die Erfindung betrifft ein Cabriofahrzeug umfassend eine Karosserie, eine Windschutzscheibe, einen hinter der Windschutzscheibe liegenden Fahrgastraum, welchen bei fehlendem Dach ein die Oberseite der Karosserie überstreichender und von der Windschutzscheibe angehobener Luftstrom frei übergreift, und ein in einem oberen Bereich der Windschutzscheibe angeordnetes Luftstromleitelement, welches den von der Windschutzscheibe angehobenen Luftstromabschnitt so über den Fahrgastraum führt, daß dieser hinter dem Fahrgastraum auf der Karosserie ohne Ausbildung eines sich in den Fahrgastraum hineinerstreckenden Wirbels auftrifft.

Die DE-A-38 33 046 offenbart ein Cabriofahrzeug bei welchem ein Paar von Luftieiteiementen auf eine Oberkante der Windschutzscheibe folgend angeordnet ist, wobei das Paar von Luftleitelementen in einem sich an die Windschutzscheibe anschließenden Dachbereich versenkbar ist.

Die US-A-4,538,852 offenbart ein auf eine Oberkante der Windschutzscheibe folgend angeordnetes Luftleitelement.

Außerdem sind Cabriofahrzeuge bekannt, bei denen zur Vermeidung eines sich hinter der Windschutzscheibe ausbildenden und den Fahrgastraum durchsetzenden Wirbels ein Windschott vorgesehen wird, wobei das Windschott in der Regel hinter der ersten Sitzreihe angeordnet werden muß und außerdem ein Windschott stets hinsichtlich der Aufbewahrungsmöglichkeiten zusätzlichen Aufwand erfordert.

Der Erfindung liegt daher die Aufgabe zugrunde, ein Cabriofahrzeug der gattungsgemäßen Art derart zu verbessern, daß das Luftstromleitelement bei einfachem Aufbau effizient wirkt und somit entweder gar kein Windschott mehr benötigt wird oder das Windschott in größerem Abstand von der ersten Sitzreihe angeordnet werden kann.

Diese Aufgabe wird bei einem Cabriofahrzeug der eingangs beschriebenen Art erfindungsgemäß dadurch gelöst, daß dieses eine in Richtung quer zur Strömungsrichtung im Abstand von der Windschutzscheibe angeordnete Luftstromteitfläche aufweist. Das heißt, daß die Luftstromleitfläche des Luftstromleitelements in diesem Fall nicht in Fortsetzung der Windschutzscheibe angeordnet ist, sondern quer zur Strömungsrichtung in einem Abstand von derselben.

Erfindungsgemäß ist dabei vorgesehen, daß die im Abstand von der Windschutzscheibe angeordnete Luftstromleitfläche zwischen sich und einer Frontseite der Windschutzscheibe einen Führungskanal für mindestens einen Teil des Luftstroms ausbildet. Die Größe dieses Führungskanals hängt dabei von dem Abstand der Luftstromleitfläche von der Frontseite der Windschutzscheibe ab, damit läßt sich einerseits vorteilhafterweise festlegen, welcher Teil des Luftstroms durch diesen Führungskanal gezielt geführt werden kann und damit auf den sich darauffolgend ausbildenden und den Fahrgastraum übergreifenden Abschnitt des Luftstroms gezielt im Sinne der erfindungsgemäßen Lösung einwirken.

Der Vorteil der erfindungsgemäßen Lösung ist ferner darin zu sehen, daß die Luftleitfläche zusammen mit dem gebildeten Führungskanal die Möglichkeit bietet, den sich über dem Fahrgastraum erstreckenden Abschnitt des Luftstroms gezielt so umzulenken, daß kein sich in den Fahrgastraum hineinerstreckender Wirbel mehr auftritt. Dies ist einerseits dadurch möglich, daß der sich über dem Fahrgastraum erstreckende Abschnitt des Luftstroms höher über den Fahrgastraum geführt oder entsprechend umgelenkt wird.

Ein weiterer Vorteil der erfindungsgemäßen Lösung ist insbesondere auch darin zu sehen, daß damit entweder ein Windschott mit seinen Nachteilen völlig entfallen kann oder die Möglichkeit besteht, das Windschott in größerem Abstand hinter der ersten Sitzreihe anzuordnen und somit die Zugänglichkeit zu Gegenständen hinter der ersten Sitzreihe zu erleichtern oder auch die Möglichkeit besteht, die zweite Sitzreihe zu benutzen. Im günstigsten Fall läßt sich mit dem erfindungsgemäßen Luftstromleitelement der sich über dem Fahrgastraum erstreckende Abschnitt des Luftstroms so beeinflussen, daß selbst die zweite Sitzreihe ohne Beeinträchtigung von Zugerscheinungen benutzbar ist.

Je nach Ausbildung des Luftstromleitelements besteht die Möglichkeit, den sich über den Fahrgastraum hinweg erstreckenden Abschnitt des Luftstroms so auszubilden, daß dieser entweder keinen Wirbel mehr bildet, der die Tendenz hat, sich in den Fahrgastraum hineinzuerstrecken oder auch gar keinen Wirbel mehr bildet, was bei geeigneter Form der Karosserie möglich ist.

Sollte eine derartige Bildung eines Wirbels unvermeidbar sein, so ist vorzugsweise das Luftstromleitelement so ausgebildet, daß es den Luftstrom so über den Fahrgastraum hinwegführt, daß dieser einen hinter dem Fahrgastraum liegenden Wirbel bildet, der sich nicht in den Fahrgastraum hineinerstreckt.

Das erfindungsgemäß vorgesehene Luftstromleitelement, welches nahe eines oberen Bereichs der Windschutzscheibe angeordnet ist, könnte prinzipiell in unterschiedlichster Art und Weise verankert sein. Beispielsweise wäre es denkbar, sofern ein Rahmen für Seitenscheiben vorhanden ist, an diesem auch das Luftstromleitelement zu verankern. Eine besonders günstige Lösung sieht jedoch vor, daß das Luftstromleitelement an einem Rahmen der Windschutzscheibe gehalten ist, da ein derartiger Rahmen für die Windschutzscheibe ohnehin erforderlich ist, um den notwendigen Überrollschutz für den Fahrgastraum zu bieten.

Es wäre dabei aber auch denkbar, das Luftstromleitelement an einem Überrollbügel des Cabriofahrzeugs zu fixieren.

Eine besonders günstige Lösung sieht dabei vor, daß die Luftstromleitfläche in Richtung quer zur Strömungsrichtung im Abstand von einer Frontseite der Windschutzscheibe angeordnet ist und somit auf einer dem Fahrgastinnenraum gegenüberliegenden Seite der Windschutzscheibe steht und damit keinerlei störenden Einfluß bei der Nutzung des Fahrgastraums oder beim, Ein- und Aussteigen ausüben kann.

Eine hinsichtlich der Optik besonders günstige Lösung sieht vor, daß die Luftstromleitfläche einen oberen Bereich der Windschutzscheibe übergreift, so daß die Luftstromleitfläche keinerlei Beeinträchtigung des Sichtfeldes durch die Windschutzscheibe bewirken kann. Insbesondere läßt sich in diesem Fall die Luftstromleitfläche vorzugsweise auch so anordnen, daß sie einen oberen Bereich des Rahmens der Windschutzscheibe übergreift und damit aus der Sicht eines Fahrgastes zumindest weitgehend im Sichtschatten eines oberen Bereichs des Rahmens der Windschutzscheibe angeordnet werden kann.

Die Wirkung des Luftstromleitelements auf den von der Windschutzscheibe angehobenen Luftstrom kann dabei in unterschiedlichster Art und Weise erfolgen. Beispielsweise ist vorgesehen, das Luftstromleitelement so auszubilden, daß es eine in Strömungsrichtung gesehen auf die Windschutzscheibe folgend angeordnete weitere Luftstromleitfläche aufweist. Diese Luftstromleitfläche kann beispielsweise im Abstand von der Windschutzscheibe angeordnet sein, so daß beispielsweise auch zwischen einem Rahmen der Windschutzscheibe und der Luftstromleitfläche noch in Strömungsrichtung des Luftstroms ein Zwischenraum verbleibt.

Vorzugsweise ist die weitere Luftstromleitfläche so angeordnet, daß sie über einer vorderen Sitzreihe des Fahrgastraums steht.

Um das Fahrgefühl eines Cabriofahrzeugs nicht allzusehr zu beeinflussen, ist vorzugsweise vorgesehen, daß die weitere Luftstromleitfläche sich in Strö-Strömungsrichtung lediglich über einen Teilbereich der Erstreckung der vorderen Sitzreihe in der Strömungsrichtung erstreckt.

Eine besonders günstige Lösung sieht vor, daß die weitere Luftstromleitfläche sich in Strömungsrichtung über weniger als die Hälfte der Erstreckung der vorderen Sitzreihe in Strömungsrichtung erstreckt.

Mit der weiteren Luftstromleitfläche ist eine besonders günstige Einwirkung auf den Luftstrom dann möglich, wenn die weitere Luftstromleitfläche in Strömungsrichtung auf die Windschutzscheibe folgend und ungefähr fluchtend zu dieser angeordnet ist. Dabei ist es möglich, zwischen der weiteren Luft-Luftstromleitfläche und der Windschutzscheibe noch einen Zwischenraum zu belassen. Es ist aber auch möglich, die weitere Luftstromleitfläche in unmittelbarem Anschluß an die Windschutzscheibe oder einen Rahmen der Wind-Windschutzscheibe anzuordnen.

Hinsichtlich unerwünschter Geräuschentwicklung ist es besonders günstig, die Luftstromleitfläche an einer Oberkante der Windschutzscheibe oder eines Rahmens derselben anliegend anzuordnen.

Vorzugsweise weist in diesem Fall das Luftstromleitelement zwei Luftstrornleitflächen auf, nämlich die den Führungskanal mit bildende und der Frontseite der Windschutzscheibe zugewandte Luftstromleitfläche, und eine der Frontseite der Windschutzscheibe abgewandte Luftstromleitfläche, die auf den Teil des Luftstroms einen Einfluß hat, der nicht den Führungskanal passiert. Damit lassen sich durch diese Aufteilung des Luftstroms besonders günstige Lenkungseffekte für den den Fahrgastraum übergreifenden Abschnitt des Luftstroms erzielen.

Eine besonders günstige Lösung sieht dabei vor, daß die beiden Luftstromleltflächen, das heißt die der Windschutzscheibe zugewandte Luftstromleitfläche und die der Windschutzscheibe abgewandte Luftstromleitftäche gemeinsam einen Profilquerschnitt definieren, welcher eine zusätzliche richtungsgebende Wirkung auf den den Fahrgastraum übergreifenden Abschnitt des Luftstroms ausübt. Beispielsweise lassen sich die beiden Luftstromleitflächen so formen, daß sie Oberflächen eines Luftstromleitkörpers sind, welcher im Querschnitt ein tragflächenähnliches Profil aufweist, welches in gleicher Weise wie bei einem Tragflügel eines Flugzeugs aufgrund der bestimmten Formgebung zur Ausrichtung des den Fahrgastraum übergreifenden Abschnitt des Luftstroms dient.

Hinsichtlich der Anordnung des Luftstromleitelements sind unterschiedlichste Möglichkeiten denkbar. So sieht eine vorteilhafte Lösung vor, daß das Luftstromleitelement fest an dem Cabriofahrzeug angeordnet ist. Dies bedingt jedoch Probleme bei der Montage des Dachs, da auch dann das Luftstromleitelement schwerlich völlig wirkungslos sein kann.

Aus diesem Grund sieht ein vorteilhaftes Ausführungsbeispiel vor, daß das Luftstromleitelement an dem Cabriofahrzeug lösbar montierbar ist, so daß sich das Luftstromleitelement nach Abnehmen des Dachs in einfacher Weise montieren und vor einem Hochklappen oder Aufsetzen des Dachs in einfacher Weise wieder lösen läßt.

Zweckmäßigerweise ist dabei vorgesehen, daß das gelöste Luftstromleitelement im Cabriofahrzeug verstaubar ist. Vorzugsweise ist dabei ein für die Aufnahme des Luftstromleitelements geeigneter Raum, beispielsweise im Kofferraum oder im Fahrgastraum oder zwischen Fahrgastraum und Kofferraum, vorgesehen.

Da bei einem Lösen des Luftstromleitelements stets die Notwendigkeit besteht, eine geeignete Aufbewahrungsmöglichkeit vorzusehen, sieht eine weitere vorteilhafte Lösung vor, daß das Luftstromleitelement von einer aktiven Stellung in eine inaktive Stellung relativ zur Windschutzscheibe bewegbar ist.

In diesem Fall ist somit ein Lösen des Luftstromleitelements nicht mehr nötig, sondern lediglich noch ein Bewegen desselben von der aktiven in die inaktive Stellung, in welcher dann auch ein Dach auf das Cabriofahrzeug aufsetzbar oder das Dach aufklappbar ist.

Diese Bewegbarkeit des Luftstromleitelements von der aktiven in die inaktive Stellung läßt sich dann günstig realisieren, wenn das Luftstromleitelement bewegbar an einem die Windschutzscheibe umgebenden Rahmen gehalten ist.

Die Bewegbarkeit kann einmal dadurch realisiert werden, daß das Luftstromleitelement relativ zur Windschutzscheibe verschwenkbar ist.

Es ist aber auch möglich, daß das Luftstromleitelement relativ zur Windschutzscheibe verschiebbar ist.

Ferner ist eine Lösung denkbar, bei welcher ein Verschieben und ein Verschwenken gleichzeitig erfolgen.

Eine Möglichkeit, das Luftstromleitelement zu realisieren sieht vor, daß das Luftstromleitelement in der inaktiven Stellung unter einem Dach des Cabriofahrzeugs positionierbar ist.

Eine derartige Lösung sieht beispielsweise vor, das Luftstromleitelement verschwenkbar anzuordnen und somit von seiner aktiven Stellung in seine inaktive Stellung so zu verschwenken, daß sich ein Dach über den Fahrgastraum erstrecken kann, ohne mit dem Luftstromleitelement zu kollidieren. Beispielsweise wäre das Luftstromleitelement in seiner inaktiven Stellung in ähnlicher Art positionierbar wie eine Sonnenblende in inaktiver Stellung, d.h. nahe in einem oberen Bereich des Windschutzscheibe.

Ferner wäre es möglich, das Luftstromleitelement in der inaktiven Stellung so zu positionieren, daß es an einer Seite der Windschutzscheibe angeordnet ist.

Dies ist in unterschiedlicher Weise realisierbar. Eine Realisierungsform sieht vor, daß das Luftstromleitelement in seiner inaktiven Stellung auf einer dem Fahrgastraum zugewandten Innenseite der Windschutzscheibe angeordnet ist. In diesem Fall ist das Luftstromleitelement bei aufgelegtem Dach dann noch zusätzlich durch das Dach geschützt.

Eine andere vorteilhafte Lösung sieht allerdings vor, daß das Luftstromleitelement in seiner inaktiven Stellung auf einer dem Fahrgastraum abgewandten Frontseite der Windschutzscheibe angeordnet ist und somit keinerlei Beeinträchtigung im Inneren des Fahrgastraum nach sich zieht.

Im Rahmen der Erläuterung der einzelnen Ausführungsbeispiele wurde nicht näher darauf eingegangen, ob das erfindungsgemäße Luftstromleitelement nun so stark auf den sich über dem Fahrgastraum erstreckenden Abschnitt des Luftstroms einwirkt, daß keinerlei Windschott mehr erforderlich ist, um Zugerscheinungen im Fahrgastraum, beispielsweise in der vorderen Sitzreihe zu vermeiden.

Ein besonders günstiges Ausführungsbeispiel der erfindungsgemäßen Lösung sieht daher vor, daß hinter der vorderen Sitzreihe des Fahrgastraums ein Windschott angeordnet ist, welches allerdings in größerem Abstand von der vorderen Sitzreihe angeordnet werden kann, wie bei den bislang bekannten Lösungen ohne ein erfindungsgemäßes Luftstromleitelement.

Eine besonders günstige Lösung sieht vor, daß hinter einer hintersten Sitzreihe des Fahrgastraums ein Windschott angeordnet ist, hinter welchem der von dem Luftstromleitelement geführte Luftstrom auf der Karosserie auftrifft. Dabei kann das Windschott so ausgebildet sein, daß sich in Verbindung mit der Karosserie gar kein Wirbel mehr ausbildet. Selbst bei Ausbildung eines Wirbels verhindert jedoch dieses Windschott, daß sich dieser Wirbel in das Innere des Fahrgastraums hineinerstreckt und somit bis zur hintersten Sitzreihe die Zugerscheinungen vermeidet.

Eine derartige Lösung ist insbesondere vorteilhaft, für Cabriofahrzeuge, die echte Viersitzerfahrzeuge sind, so daß auch die Möglichkeit geschaffen worden ist, die zweite und somit hinterste Sitzreihe ohne Ausbildung von Zugerscheinungen zu benutzen.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine schematische Seitenansicht eines Cabriofahrzeugs gemäß dem Stand der Technik;
- Fig. 2: eine Seitenansicht ähnlich Fig. 1 eines Cabriofahrzeugs gemäß einem nicht die Merkmale des Anspruchs 1 aufweisenden ersten Ausführungsbeispiel;
- Fig. 3: eine Seitenansicht eines Cabriofahrzeugs ähnlich Fig. 1 gemäß einem die Merkmale des Anspruchs 1 aufweisenden zweiten Ausführungsbeispiel;
- Fig. 4: eine Seitenansicht eines Cabriofahrzeugs ähnlich Fig. 1 gemäß einem die Merkmale des Anspruchs 1 aufweisenden dritten Ausführungsbeispiel;
- Fig. 5: eine Seitenansicht eines Cabriofahrzeugs ähnlich Fig. 1 gemäß einem nicht die Merkmale des Anspruchs 1 aufweisenden vierten Ausführungsbeispiel;
- Fig. 6: eine Seitenansicht eines Cabriofahrzeugs ähnlich Fig. 1 gemäß einem die Merkmale des Anspruchs 1 aufweisenden fünften Ausführungsbeispiels;
- Fig. 7: eine teilweise ausschnittsweise Darstellung einer Seitenansicht im Bereich eines Luftstromleitelements bei einem nicht die Merkmale des Anspruchs 1 aufweisenden sechsten Ausführungsbeispiel;
- Fig. 8: eine ausschnittsweise Darstellung ähnlich Fig. 7 eines nicht die Merkmale des Anspruchs 1 aufweisenden siebten Ausführungsbeispiels und
- Fig. 9: eine ausschnittsweise Darstellung ähnlich Fig. 7 eines die Merkmale des Anspruchs 1 aufweisenden achten Ausführungsbeispiels.

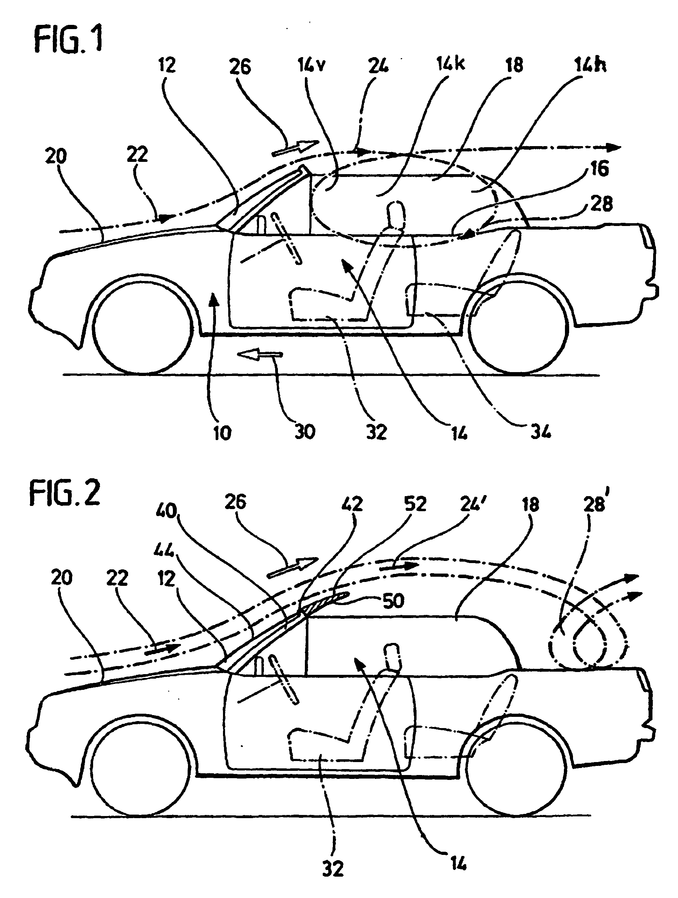

Ein aus dem Stand der Technik bekanntes Cabriofahrzeug, dargestellt in Fig. 1, umfaßt eine Karosserie 10, die eine Windschutzscheibe 12 trägt, hinter welcher ein Fahrgastraum 14 angeordnet ist, der seinerseits in einem unteren, bis zu einer Gürtellinie 16 der Karosserie 10 reichenden Bereich von der Karosserie 10 umschlossen ist und in einem oberen Bereich gegebenenfalls von Seitenfenstern 18 umgeben, im übrigen jedoch bei einem entfernten Dach des Cabriofahrzeugs nach oben offen ist.

Bei einem derartigen Fahrzeug wird, beispielsweise von einer Fronthaube 20 der Karosserie 10 ein als Ganzes mit 22 bezeichneter die Karosserie 10 auf ihrer Oberseite umströmender Luftstrom von der Windschutzscheibe 12 angehoben und überströmt mit einem Abschnitt 24 in einer Strömungsrichtung 26 den Fahrgastraum 14, wobei der Abschnitt 24 des Luftstroms 22 sich bis zu einem hinteren Bereich des Fahrgastraums 14 erstreckt, unter Ausbildung eines Wirbels 28 zunächst in einen hinteren Bereich 14h des Fahrgastraums 14 eintritt, dann sich entgegengesetzt zu einer Fahrtrichtung 30 durch den Fahrgastraum 14 hindurchbewegt bis zu einem vorderen Bereich 14v und von diesem dann nach oben aus dem oben offenen Fahrgastraum 14 wieder austritt, so daß der Wirbel 28 letztlich den gesamten Fahrgastraum 14 von dem hinteren Bereich 14h bis zum vorderen Bereich 14v, vorzugsweise in Höhe oberhalb einer vorderen Sitzreihe 32 und einer hinteren Sitzreihe 34, den Fahrgastraum 14 durchströmt. Dabei bildet sich in einem Kopfbereich 14k des Fahrgastraums 14, beispielsweise über der vorderen Sitzreihe 32, eine für die Insassen unangenehme Zugerscheinung aus.

Bei einer erfindungsgemäßen Lösung, dargestellt in Fig. 2, ist an einem Rahmen 40 für die Windschutzscheibe 12, und zwar in einem oberen Bereich 42 desselben, ein als Ganzes mit 50 bezeichnetes Luftstromleitelement vorgesehen, welches sich im Fall des in Fig. 2 dargestellten ersten Ausführungsbeispiels in Fortsetzung der Windschutzscheibe 12 erstreckt und eine Luftstromleitfläche 52 aufweist, welche beispielsweise so angeordnet ist, daß sie ungefähr eine mit einer Frontseite 44 der Windschutzscheibe 12 fluchtende Ausrichtung aufweist. Die Luftstromleitfläche 52 erstreckt sich dabei vorzugsweise in einer Strömungsrichtung 26 des Luftstroms 22 über einen Teil des Fahrgastraums 14 hinweg, vorzugsweise über ungefähr maximal die Hälfte der Erstreckung der vorderen Sitzreihe 32, und dient dazu, den den Fahrgastraum 14 auf seiner oberen offenen Seite übergreifenden Abschnitt 24' des Luftstroms 22 so weit nach oben über den Fahrgastraum 14 hinwegzuführen, daß dieser sich so weit hinter dem Fahrgastraum 14 absenkt, daß kein den Fahrgastraum 14 durchsetzender Wirbel entsteht. Der Abschnitt 24' des Luftstroms 22 wird insbesondere so weit abgelenkt, daß selbst bei Entstehen eines Wirbels 28' dieser hinter dem Fahrgastraum 14 auftritt und somit keine Zugerscheinung im Fahrgastraum 14 entsteht.

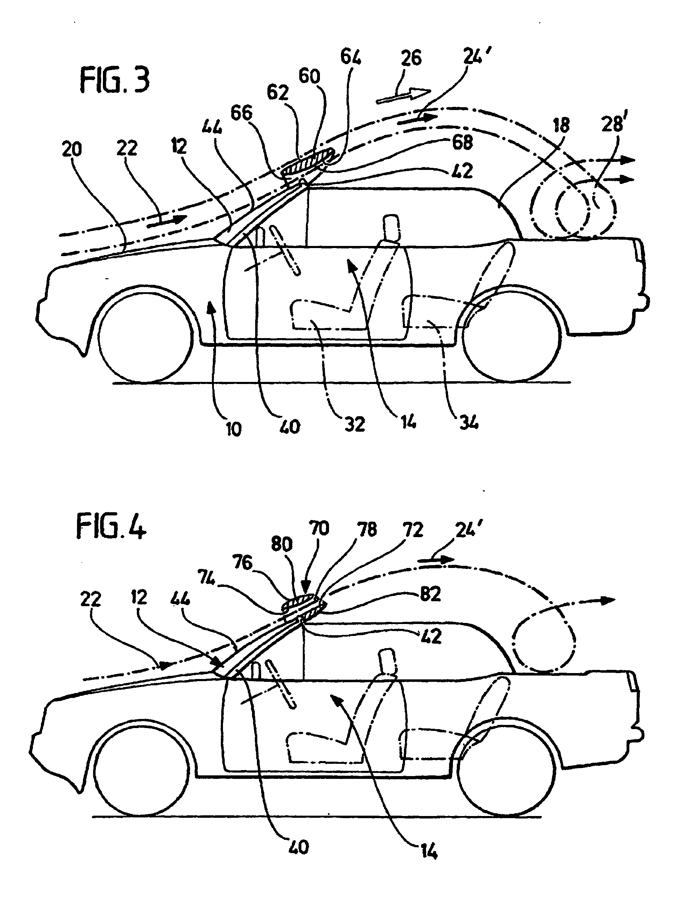

Bei einem zweiten Ausführungsbeispiel eines erfindungsgemäßen Cabriofahrzeugs, dargestellt in Fig. 3, ist ebenfalls an einem oberen Bereich 42 des Rahmens 40 der Windschutzscheibe 12 ein Luftstromleitelement 60 gehalten, dieses schließt jedoch nicht unmittelbar an die Windschutzscheibe 12 oder den Rahmen 40 an, sondern ist in einem Abstand von der Frontseite 44 der Windschutzscheibe 12 in dem Luftstrom 22 angeordnet, und zwar so, daß dieses eine der Windschutzscheibe 12 abgewandte Luftstromleitfläche 62 sowie eine der Windschutzscheibe 12 zugewandte Luftstromleitfläche 64 aufweist, die beide von dem Luftstrom 22 umströmt sind. Das Luftstromleitelement 60 ist ebenfalls so ausgerichtet, daß dieses den sich über dem Fahrgastraum 14 erstreckenden Abschnitt 24' des Luftstroms 22 so weit umlenkt, daß dieser sich hinter dem Fahrgastraum 14 in Richtung der Karosserie 10 absenkt und damit keinen den Fahrgastraum 14 durchsetzenden Wirbel 28 bildet. Selbst bei Bildung eines Wirbels 28', wie in Fig. 3 dargestellt, liegt dieser hinter dem Fahrgastraum 14 und hilft somit Zugerscheinungen zu vermeiden.

Die Wirkung des Luftstromleitelements 60 gemäß dem zweiten Ausführungsbeispiel ist insoweit sehr effizient, als sich einerseits zwischen der Frontseite 44 und der Luftstromleitfläche 64 ein Kanal 66 bildet, welche eine Art Düsenwirkung auf den diesen durchsetzenden Teil des Luftstroms 22 hat, so daß damit eine sehr gezielte Lenkung des Luftstroms 22 möglich ist.

Ferner kann das Luftstromleitelement 60 durch besondere Formgebung der Luftstromleitflächen 62 und 64 so geformt sein, beispielsweise in der Form eines Tragflächenprofils, das durch die Form der beiden Luftstromleitflächen 62 und 64 zusätzlich eine gezielte Lenkung des Luftstroms 22 erfolgt, so daß der Abschnitt 24' sich in der gewünschten Weise über den Fahrgastraum 14 erstreckt. Damit ist eine Möglichkeit geschaffen, das Luftstromleitelement 60 mit relativ geringer Länge in Richtung der Strömungsrichtung 26 auszubilden.

Vorzugsweise läßt sich ein derartiges Luftstromleitelement mit an dessen äußeren Enden angreifenden Haltewangen 68 am Rahmen 40 der Windschutzscheibe 12, vorzugsweise in einem oberen Bereich derselben, lösbar fixieren.

Beispielsweise besteht die Möglichkeit, die Haltewangen 68 so auszubilden, daß das Luftstromleitelement 60 auf dem Rahmen 40 durch Aufstecken fixierbar ist.

Bei einem dritten Ausführungsbeispiel eines erfindungsgemäßen Cabriofahrzeugs, dargestellt in Fig. 4, ist ein als Ganzes mit 70 bezeichnetes Luftstromleitelement vorgesehen, welches insgesamt drei Luftstromleitflächen 72, 74 und 76 aufweist, wobei die Luftleitfläche 72 ähnlich der Luftstromleitfläche 52 angeordnet ist und sich im Anschluß an einen oberen Bereich 42 des Rahmens 40 erstreckt. Dieser Luftstromleitfläche zugewandt, jedoch im Abstand von dieser angeordnet, ist eine Luftstromleitfläche 74, welche ebenfalls im Abstand von der Frontseite 44 der Windschutzscheibe 12 angeordnet ist. Ferner ist auf einer der Windschutzscheibe 12 gegenüberliegenden Seite des Luftstromleitelements 70 eine Luftstromleitfläche 76 vorgesehen.

Die Luftstromleitflächen 72 und 74 bilden gemeinsam einen Kanal (78), welcher in gleicher Weise wie der Kanal 66 düsenähnlich wirkt.

Ferner sind die Luftstromleitflächen 74 und 76 in ihrer Wirkung mit der der Luftstromleitflächen 64 und 62 vergleichbar, so daß diese vorzugsweise Oberflächen eines ebenfalls im Querschnitt tragflächenähnlich geformten Luftstromleitkörpers 80 sind, welcher gemeinsam mit einem die Luftstromleitfläche 72 aufweisenden Luftstromleitkörper 82 eine Einheit bilden, die eine besonders effiziente Ausrichtung des Abschnitts 24' des Luftstroms 22 gewährleistet und somit auch diesen in der gewünschten Form zu lenken in der Lage ist, insbesondere so, daß keine Zugerscheinung im Fahrgastraum 14 auftritt. Aufgrund der kombinierten Wirkung des Kanals 78 und der Form der Luftstromleitflächen 74 und 76 ist eine besonders gute Richtwirkung auf den Abschnitt 24' des Luftstroms erzeugbar.

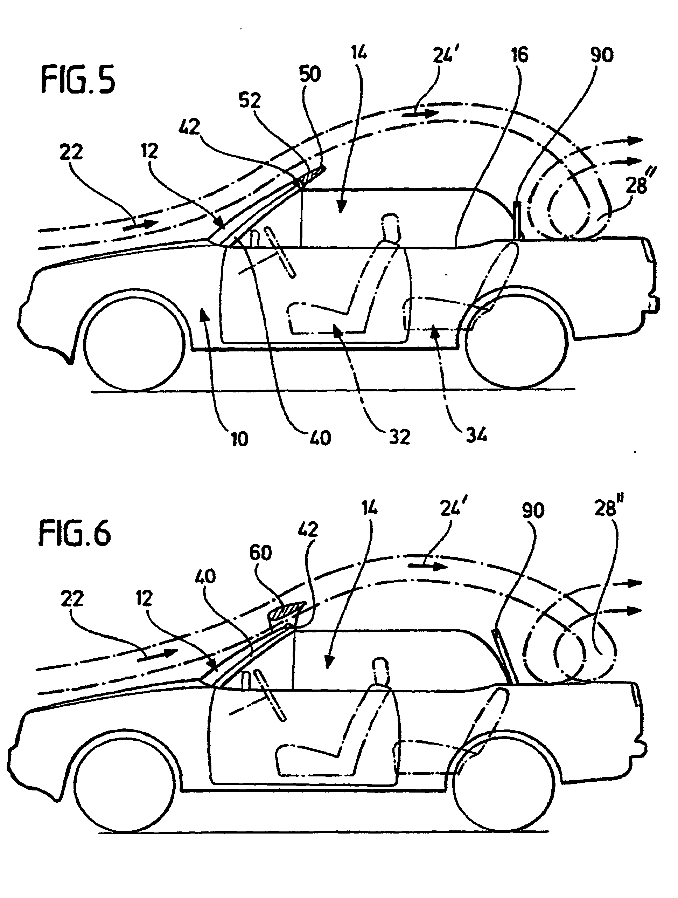

Bei einem vierten Ausführungsbeispiel eines erfindungsgemäßen Cabriofahrzeugs, dargestellt in Fig. 5, ist an dem Rahmen 40 der Windschutzscheibe 12 in gleicher Weise wie im Zusammenhang mit dem ersten Ausführungsbeispiel beschrieben, ein Luftstromleitelement 50 vorgesehen, welches eine Luftstromleitfläche 52 aufweist, die in gleicher Weise wie beim ersten Ausführungsbeispiel wirkt. Allerdings ist in diesem Fall das Luftstromleitelement in seinen Abmessungen beispielsweise kleiner dimensioniert und somit auch weniger wirkungsvoll. Dieses ist zwar in der Lage, den Abschnitt 24' des Luftstroms 22 so weit umzulenken, daß dieser hinter dem Fahrgastraum 14 wiederum sich der Karosserie 10 annähert, allerdings bildet sich ein Wirbel 28" aus, welcher in den Fahrgastraum 14 teilweise eintreten würde.

Um dieses zu verhindern, ist hinter der hinteren Sitzreihe 34 ein als Ganzes mit 90 bezeichnetes Windschott angeordnet, welches in der für ein Windschott bekannten Weise ein Eintreten dieses Wirbels 28" in den Fahrgastraum 14 verhindert, nämlich dadurch, daß dieses über die Gürtellinie 16 der Karosserie 10 übersteht und somit eine Ausbreitung des Wirbels 28" in den Fahrgastraum 14 hinein verhindert.

Dennoch hat bei diesem Ausführungsbeispiel das Luftstromleitelement 50 den Effekt, daß es den Abschnitt 24' des Luftstroms 22 so weit nach hinten führt, daß der Wirbel 28" sich durch das vorhandene Windschott 90 hinter dem Fahrgastraum 14 halten läßt. Dies ist bei bisher üblichen Windschottlösungen ohne ein erfindungsgemäßes Luftleitelement 50 dann nicht möglich, wenn das Cabriofahrzeug zwei Sitzreihen 32 und 34 aufweist.

Das Windschott 90 ist dabei in üblicher Weise ausgebildet, das heißt es kann einen starren oder einen zusammenklappbaren Rahmen aufweisen und gegebenenfalls eine bei Windschotts übliche geringe Luftdurchlässigkeit.

Ferner ist das Windschott 90 entweder abnehmbar oder ausklappbar oder als Rollo aus einem Aufbewahrungsraum ausrollbar.

Bei einem fünften Ausführungsbeispiel, dargestellt in Fig. 6, ist anstelle des Luftstromleitelements 50 ein verkleinertes Luftstromleitelement 60 vorgesehen, welches in der bereits im Zusammenhang mit dem zweiten Ausführungsbeispiel beschriebenen Art und Weise auf den Luftstrom 22 wirkt, und den Abschnitt 24' desselben ohne Ausbildung des Wirbels 28 über den Fahrgastraum 14 hinübertreten läßt. Allerdings ist auch in diesem Fall das Windschott 90 vorgesehen, welches verhindert, daß der sich hinter dem Fahrgastraum 14 ausbildende Wirbel 28" sich in Richtung des Fahrgastraums 14 ausbreitet.

Auch in diesem Fall ist das Luftstromleitelement 60 kleiner dimensioniert und somit weniger wirksam als das im Zusammenhang mit dem zweiten Ausführungsbeispiel beschriebene Luftstromleitelement, so daß noch unterstützend zur Verhinderung des Wirbels 28 im Fahrgastraum ein Windschott 90 in gleicher Weise wie beim vierten Ausführungsbeispiel erforderlich ist.

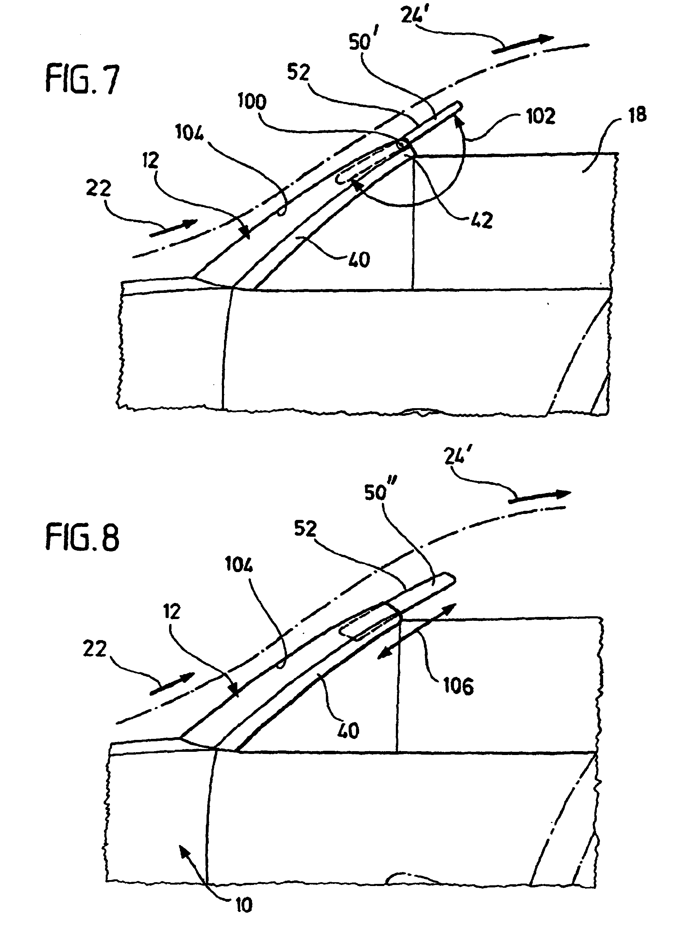

Bei einem sechsten Ausführungsbeispiel, dargestellt in Fig. 7, ist ein Luftstromleitelement 50' entsprechend dem ersten Ausführungsbeispiel vorgesehen.

Um beim Abnehmen des Dachs eine dann stets notwendige Montage dieses Luftstromleitelements 50' zu vermeiden, ist das Luftstromleitelement 50' um eine Achse 100 drehbar an dem oberen Bereich 42 des Rahmens 40 der Windschutzscheibe 12 gelagert und in der Schwenkrichtung 102 so verschwenkbar, daß dieses von einer aktiven Stellung, in Fig. 7 durchgezogen gezeichnet, in eine inaktive Stellung, in Fig. 7 gestrichelt gezeichnet, verschwenkbar ist, wobei das Luftstromleitelement 50' in diesem Fall in der inaktiven Stellung nahe einer Innenseite 104 der Windschutzscheibe 12 steht, in einer ähnlichen Stellung, wie beispielsweise eine Sonnenblende in ihrer aktiven Stellung.

Es ist aber auch möglich, das Luftstromleitelement 50' lediglich soweit zu verschwenken, daß dieses mit der Luftleitfläche 52 nahe einer Unterseite eines aufgesetzten Daches steht und somit im Fall eines aufgesetzten Daches für einen Fahrgast oder den Fahrer keinerlei Sichtbehinderung im Bereich der Windschutzscheibe 12 bewirkt.

Bei einem siebten Ausführungsbeispiel, dargestellt in Fig. 8, wird ebenfalls ein Luftstromleitelement 50" eingesetzt, welches entsprechend dem Luftstromleitelement 50 wirkt.

In diesem Fall ist das Luftstromleitelement 50" am Rahmen der Windschutzscheibe 12 in einer Verschieberichtung 106 linear verschiebbar gehalten und somit von einer aktiven Position, in Fig. 8 durchgezogen dargestellt, in Richtung der Karosserie 10 in eine inaktive Stellung verschiebbar, in welcher es nahe der Innenseite 104 steht oder an dieser anliegt, wie in Fig. 8 dargestellt.

Auch in diesem Fall läßt sich das Luftstromleitelement 50" in einfacher Weise von der aktiven in die inaktive Stellung überführen.

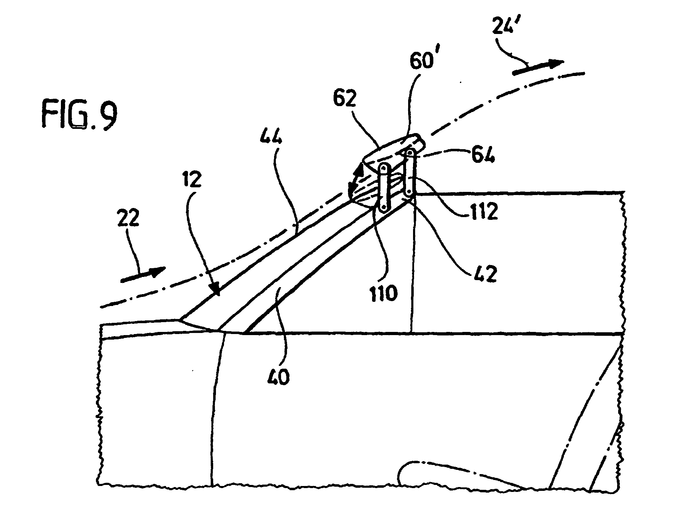

Bei einem achten Ausführungsbeispiel, dargestellt in Fig. 9, ist ein Luftstromleitelement 60' ähnlich dem Luftstromleitelement 60 vorgesehen, welches in seiner aktiven Stellung, durchgezogen dargestellt in Fig. 9, mit seinen Luftstromleitflächen 62 und 64 in gleicher Weise wirkt, wie das Luftstromleitelement 60.

Ferner ist dieses Luftstromleitelement 60' noch in eine in Fig. 9 gestrichelt gezeichnete inaktive Stellung bringbar, und zwar durch eine Bewegung, welche sowohl eine Drehung als auch eine lineare Verschiebung umfaßt. Hierzu ist beispielsweise das Luftstromleitelement 60 mit zwei Schwenkarmen 110 und 112 versehen, die einerseits An dem oberen Bereich 42 des Rahmens 40 der Windschutzscheibe 12 angelenkt sind und andererseits gelenkig mit dem Luftstromleitelement 60' verbunden sind, so daß das Luftstromleitelement 60' mit diesen beiden Lenkern 110 und 112 ähnlich Parallellenkern zwischen der aktiven Stellung und der inaktiven Stellung hin- und herbewegbar ist, wobei in der aktiven Stellung die Luftstromleitfläche 64 im Abstand von der Frontseite 44 der Windschutzscheibe 12 steht, während in der inaktiven, in Fig. 9 gestrichelt dargestellten Stellung, das Luftstromleitelement 60' vorzugsweise mit der Luftstromleitfläche 64 auf der Frontseite 44 der Windschutzscheibe 12 im oberen Bereich aufliegt oder nahe diesem angeordnet ist, so daß sich kein von dem Luftstrom 22 durchsetzter Kanal zwischen der Frontseite 44 und der Luftstromleitfläche 64 mehr ausbildet.

## Patentansprüche

1. Cabriofahrzeug umfassend eine Karosserie (10), eine Windschutzscheibe (12), einen hinter der Windschutzscheibe (12) liegenden Fahrgastraum (14), welchen bei fehlendem Dach ein die Oberseite der Karosserie (10) überstreichender und von der Windschutzscheibe (12) angehobener Luftstrom (22) frei übergreift, und ein in einem oberen Bereich der Windschutzscheibe (12) angeordnetes Luftstromleitelement (60, 60', 70), welches den von der Windschutzscheibe (12) angehobenen Luftstromabschnitt (24, 24') so über den Fahrgastraum (14) führt, daß dieser hinter dem Fahrgastraum (14) auf der Karosserie (10) ohne Ausbildung eines sich in den Fahrgastraum (14) hinein erstreckenden Wirbels (28) auftrifft, **dadurch gekennzeichnet, daß** das Luftstromleitelement (60, 60', 70) eine in Richtung quer zur Strömungsrichtung (26) im Abstand von der Windschutzscheibe (12) angeordnete Luftstromleitfläche (62, 64, 74, 76) umfaßt, und daß die im Abstand von der Windschutzscheibe (12) angeordnete Luftstromleitfläche (62, 64, 74, 76) zwischen sich und einer Frontseite (44) der Windschutzscheibe (12) einen Führungskanal (66, 78) für mindestens einen Teil des Luftstroms (22) bildet.

2. Cabriofahrzeug nach Anspruch 1, **dadurch gekennzeichnet, daß** das Luftstromleitelement (60, 60', 70) den Luftstromabschnitt (24, 24') so über den Fahrgastraum (14) hinwegführt, daß dieser einen hinterdem Fahrgastraum (14) liegenden Wirbel (28', 28") bildet.

3. Cabriofahrzeug nach Anspruch 1 oder 2, **dadurch gekennzeichnet, daß** das Luftstromleitelement (60, 60', 70) an einem Rahmen (40) der Windschutzscheibe (12) gehalten ist.

4. Cabriofahrzeug nach einem der voranstehenden Ansprüche, **dadurch gekennzeichnet, daß** die Luftstromleitfläche (62, 64, 74, 76) in Richtung quer zur Strömungsrichtung (26) im Abstand von einer Frontseite (44) der Windschutzscheibe (12) angeordnet ist.

5. Cabriofahrzeug nach Anspruch 4, **dadurch gekennzeichnet, daß** die Luftstromleitfläche (62, 64, 74, 76) einen oberen Bereich der Windschutzscheibe (12) oder des Rahmens (40) übergreift.

6. Cabriofahrzeug nach einem der voranstehenden Ansprüche, **dadurch gekennzeichnet, daß** das Luftstromleitelement (70) eine in Strömungsrichtung (26) gesehen auf die Windschutzscheibe (12) folgend angeordnete weitere Luftstromleitfläche (72) aufweist.

7. Cabriofahrzeug nach Anspruch 6, **dadurch gekennzeichnet, daß** die weitere Luftstromleitfläche (72) über einer vorderen Sitzreihe (32) des Fahrgastraums (14) angeordnet ist.

8. Cabriofahrzeug nach Anspruch 6 oder 7, **dadurch gekennzeichnet, daß** die weitere Luftstromleitfläche (72) sich in Strömungsrichtung (26) über einen Teilbereich der Erstreckung der vorderen Sitzreihe (32) in Strömungsrichtung (26) erstreckt.

9. Cabriofahrzeug nach Anspruch 8, **dadurch gekennzeichnet, daß** die weitere Luftstromleitflächen (72) sich in Strömungsrichtung (26) über weniger als die Hälfte der Erstreckung der vorderen Sitzreihe (32) in Strömungsrichtung (26) erstreckt.

10. Cabriofahrzeug nach einem der Ansprüche 6 bis 9, **dadurch gekennzeichnet, daß** die weitere Luftstromleitfläche (72) in Strömungsrichtung auf die Windschutzscheibe (12) folgend angeordnet und ungefähr fluchtend zu dieser ausgerichtet ist.

11. Cabriofahrzeug nach einem der Ansprüche 6 bis 10, **dadurch gekennzeichnet, daß** die weitere Luftstromleitfläche (72) an einer Oberkante der Windschutzscheibe (12) oder deren Rahmen (40) anliegend angeordnet ist.

12. Cabriofahrzeug nach einem der voranstehenden Ansprüche, **dadurch gekennzeichnet, daß** das Luftstromleitelement (60, 60', 70) lösbar montierbar ist.

13. Cabriofahrzeug nach Anspruch 12, **dadurch gekennzeichnet, daß** das gelöste Luftstromleitelement (60, 60', 70) im Cabriofahrzeug verstaubar ist.

14. Cabriofahrzeug nach einem der voranstehenden Ansprüche, **dadurch gekennzeichnet, daß** das Luftstromleitelement (60') zwischen einer aktiven Stellung und einer inaktiven Stellung relativ zur Windschutzscheibe (12) bewegbar ist.

15. Cabriofahrzeug nach Anspruch 14, **dadurch gekennzeichnet, daß** das Luftstromleitelement (60') in der inaktiven Stellung nahe in einem oberen Bereich der Windschutzscheibe (12) angeordnet ist.

16. Cabriofahrzeug nach Anspruch 14 oder 15, **dadurch gekennzeichnet, daß** das Luftstromleitelement (60') bewegbar an einem die Windschutzscheibe (12) umgebenden Rahmen (40) gehalten ist.

17. Cabriofahrzeug nach einem der Ansprüche 14 bis 16, **dadurch gekennzeichnet, daß** das Luftstromleitelement (60') relativ zur Windschutzscheibe (12) verschwenkbar ist.

18. Cabriofahrzeug nach einem der Ansprüche 16 bis 17, **dadurch gekennzeichnet, daß** das Luftstromleitelement (60') relativ zur Windschutzscheibe (12) verschiebbar ist.

19. Cabriofahrzeug nach einem der Ansprüche 14 bis 18, **dadurch gekennzeichnet, daß** das Luftstromleitelement in der inaktiven Stellung unter einem Dach positionierbar ist.

20. Cabriofahrzeug nach einem der Ansprüche 14 bis 19, **dadurch gekennzeichnet, daß** das Luftstromleitelement (60') in der inaktiven Stellung auf einer Seite der Windschutzscheibe (12) angeordnet ist.

21. Cabriofahrzeug nach einem der voranstehenden Ansprüche, **dadurch gekennzeichnet, daß** hinter dervorderen Sitzreihe (32) des Fahrgastraums (14) ein Windschott (90) angeordnet ist, hinter welchem der von dem Luftstromleitelement (60') geführte Luftstromabschnitt (24') auf der Karosserie (10) auftrifft.

22. Cabriofahrzeug nach Anspruch 21 **dadurch gekennzeichnet, daß** das Windschott (90) hinter der ninteren Sitzreihe (34) angeordnet ist.

## Claims

1. Convertible vehicle comprising a car body (10), a windscreen (12), a passenger compartment (14) situated behind the windscreen (12) and freely overlapped, in the absence of a roof, by an airflow (22), which sweeps over the top of the car body (10) and is lifted by the windscreen (12), and an airflow baffle element (60, 60', 70), which is disposed in an upper region of the windscreen (12) and conveys the airflow portion (24') lifted by the windscreen (12) in such a way over the passenger compartment (14) that it encounters the car body (10) behind the passenger compartment (14) without the formation of an eddy (28) extending into the passenger compartment (14),
**characterized in that** the airflow baffle element (60, 60', 70) comprises an airflow baffle face (62, 64, 74, 76) disposed in a direction at right angles to the flow direction (26) at a spacing from the windscreen (12), and that the airflow baffle face (62, 64, 74, 76) disposed at a spacing from the windscreen (12) forms between itself and a front side (44) of the windscreen (12) a guide channel (66, 78) for at least some of the airflow (22).

2. Convertible vehicle according to claim 1, **characterized in that** the airflow baffle element (60, 60', 70) conveys the airflow portion (24, 24') in such a manner across and over the passenger compartment (14) that said portion forms an eddy (28', 28") situated behind the passenger compartment (14).

3. Convertible vehicle according to claim 1 or 2, **characterized in that** the airflow baffle element (60, 60', 70) is supported on a frame (40) of the windscreen (12).

4. Convertible vehicle according to one of the preceding claims, **characterized in that** the airflow baffle face (62, 64, 74, 76) is disposed in a direction at right angles to the flow direction (26) at a spacing from a front side (44) of the windscreen (12).

5. Convertible vehicle according to claim 4, **characterized in that** the airflow baffle face (62, 64, 74, 76) overlaps an upper region of the windscreen (12) or of the frame (40).

6. Convertible vehicle according to one of the preceding claims, **characterized in that** the airflow baffle element (70) has a further airflow baffle face (72) disposed, viewed in flow direction (26), downstream of the windscreen (12).

7. Convertible vehicle according to claim 6, **characterized in that** the further airflow baffle face (72) is disposed above a front row of seats (32) of the passenger compartment (14).

8. Convertible vehicle according to claim 6 or 7, **characterized in that** the further airflow baffle face (72) extends in flow direction (26) over a sub-region of the extent of the front row of seats (32) in flow direction (26).

9. Convertible vehicle according to claim 8, **characterized in that** the further airflow baffle face (72) extends in flow direction (26) over less than half of the extent of the front row of seats (32) in flow direction (26).

10. Convertible vehicle according to one of claims 6 to 9, **characterized in that** the further airflow baffle face (72) is disposed in flow direction downstream of the windscreen (12) and is aligned approximately flush with the latter.

11. Convertible vehicle according to one of claims 6 to 10, **characterized in that** the further airflow baffle face (72) is disposed adjacent to an upper edge of the windscreen (12) or its frame (40).

12. Convertible vehicle according to one of the preceding claims, **characterized in that** the airflow baffle element (60, 60', 70) is mountable in a detachable manner.

13. Convertible vehicle according to claim 12, **characterized in that** the detached airflow baffle element (60, 60', 70) is stowable in the convertible vehicle.

14. Convertible vehicle according to one of the preceding claims, **characterized in that** the airflow baffle element (60') is movable between an active position and an inactive position relative to the windscreen (12).

15. Convertible vehicle according to claim 14, **characterized in that** the airflow baffle element (60') in the inactive position is disposed closely in an upper region of the windscreen (12).

16. Convertible vehicle according to claim 14 or 15, **characterized in that** the airflow baffle element (60') is supported in a movable manner on a frame (40) surrounding the windscreen (12).

17. Convertible vehicle according to one of claims 14 to 16, **characterized in that** the airflow baffle element (60') is pivotable relative to the windscreen (12).

18. Convertible vehicle according to one of claims 16 to 17, **characterized in that** the airflow baffle element (60') is displaceable relative to the windscreen (12).

19. Convertible vehicle according to one of claims 14 to 18, **characterized in that** the airflow baffle element in the inactive position is positionable under a roof.

20. Convertible vehicle according to one of claims 14 to 19, **characterized in that** the airflow baffle element (60') in the inactive position is disposed against one side of the windscreen (12).

21. Convertible vehicle according to one of the preceding claims, **characterized in that** disposed behind the front row of seats (32) of the passenger compartment (14) is a wind baffle (90), behind which the airflow portion (24') conveyed by the airflow baffle element (60') encounters the car body (10).

22. Convertible vehicle according to claim 21, **characterized in that** the wind baffle (90) is disposed behind the back row of seats (34).

## Revendications

1. Véhicule convertible du type cabriolet, comprenant une carrosserie (10), un pare-brise (12), un habitacle (14) placé derrière le pare-brise (12) et surmonté librement, en l'absence du pavillon ou toit, par un écoulement d'air (22) balayant la surface supérieure de la carrosserie (10) et soulevé par le pare-brise (12), et un élément de guidage d'écoulement d'air (60, 60', 70) qui est disposé dans une zone supérieure du pare-brise (12) et qui guide la portion d'écoulement d'air (24, 24') soulevée par le pare-brise (12) au-dessus de l'habitacle (14) de telle façon que cette portion d'écoulement d'air retombe sur la carrosserie (10) derrière l'habitacle (14) sans formation d'un tourbillon (28) s'étendant à l'intérieur de l'habitacle (14),
**caractérisé en ce que** l'élément de guidage d'écoulement d'air (60, 60', 70) présente une surface de guidage d'écoulement d'air (62, 64, 74, 76) disposée à distance du pare-brise (12) suivant une direction perpendiculaire au sens d'écoulement (26), et **en ce que** la surface de guidage d'écoulement d'air (62, 64, 74, 76) disposée à distance du pare-brise (12) forme entre elle-même et une face frontale (44) du pare-brise (12) un canal de guidage (66, 78) pour au moins une partie de l'écoulement d'air (22).

2. Véhicule convertible du type cabriolet selon la revendication 1, **caractérisé en ce que** l'élément de guidage d'écoulement d'air (60, 60', 70) conduit la portion d'écoulement d'air (24, 24') pardessus l'habitacle (14) de telle façon que cette portion d'écoulement d'air forme un tourbillon (28', 28'') en arrière de l'habitacle (14).

3. Véhicule convertible du type cabriolet selon la revendication 1 ou 2, **caractérisé en ce que** l'élément de guidage d'écoulement d'air (60, 60', 70) est supporté sur un cadre (40) du pare-brise (12).

4. Véhicule convertible du type cabriolet selon l'une des revendications précédentes, **caractérisé en ce que** la surface de guidage d'écoulement d'air (62, 64, 74, 76) est disposée à distance d'une face frontale (44) du pare-brise (12) suivant une direction perpendiculairement au sens d'écoulement (26).

5. Véhicule convertible du type cabriolet selon la revendication 4, **caractérisé en ce que** la surface de guidage d'écoulement d'air (62, 64, 74, 76) surmonte une zone supérieure du pare-brise (12) ou du cadre (40).

6. Véhicule convertible du type cabriolet selon l'une des revendications précédentes, **caractérisé en ce que** l'élément de guidage d'écoulement d'air (70) comporte une autre surface de guidage d'écoulement d'air (72) qui est disposée de manière à succéder au pare-brise (12), en se référant au sens d'écoulement (26).

7. Véhicule convertible du type cabriolet selon la revendication 6, **caractérisé en ce que** ladite autre surface de guidage d'écoulement d'air (72) est disposée au-dessus d'une rangée de sièges avant (32) de l'habitacle (14).

8. Véhicule convertible du type cabriolet selon la revendication 6 ou 7, **caractérisé en ce que** ladite autre surface de guidage d'écoulement d'air (72) s'étend dans le sens d'écoulement (26) sur une zone partielle de l'étendue de la rangée de sièges avant (32) dans le sens d'écoulement (26).

9. Véhicule convertible du type cabriolet selon la revendication 8, **caractérisé en ce que** ladite autre surface de guidage d'écoulement d'air (72) s'étend, dans le sens d'écoulement (26), sur moins de la moitié de l'étendue de la rangée de sièges avant (32) dans le sens d'écoulement (26).

10. Véhicule convertible du type cabriolet selon l'une des revendications 6 à 9, **caractérisé en ce que** ladite autre surface de guidage d'écoulement d'air (72) est disposée dans le sens de l'écoulement à la suite du pare-brise (12) en étant orientée approximativement dans le prolongement de celui-ci.

11. Véhicule convertible du type cabriolet selon l'une des revendications 6 à 10, **caractérisé en ce que** ladite autre surface de guidage d'écoulement d'air (72) est disposée de manière à s'appliquer contre un bord supérieur du pare-brise (12) ou contre le cadre (40) de ce dernier.

12. Véhicule convertible du type cabriolet selon l'une des revendications précédentes, **caractérisé en ce que** l'élément de guidage d'écoulement d'air (60, 60', 70) peut être monté de manière amovible.

13. Véhicule convertible du type cabriolet selon la revendication 12, **caractérisé en ce que** l'élément de guidage d'écoulement d'air (60, 60', 70) démonté peut être rangé et stocké dans le véhicule convertible du type cabriolet.

14. Véhicule convertible du type cabriolet selon l'une des revendications précédentes, **caractérisé en ce que** l'élément de guidage d'écoulement d'air (60') est mobile entre une position active et une position inactive par rapport au pare-brise (12).

15. Véhicule convertible du type cabriolet selon la revendication 14, **caractérisé en ce que** l'élément de guidage d'écoulement d'air (60'), dans la position inactive, est disposé à proximité d'une zone supérieure du pare-brise (12).

16. Véhicule convertible du type cabriolet selon la revendication 14 ou 15, **caractérisé en ce que** l'élément de guidage d'écoulement d'air (60') est supporté de manière mobile sur un cadre (40) entourant le pare-brise (12).

17. Véhicule convertible du type cabriolet selon l'une des revendications 14 à 16, **caractérisé en ce que** l'élément de guidage d'écoulement d'air (60') peut pivoter par rapport au pare-brise (12).

18. Véhicule convertible du type cabriolet selon l'une des revendications 16 à 17, **caractérisé en ce que** l'élément de guidage d'écoulement d'air (60') peut coulisser par rapport au pare-brise (12).

19. Véhicule convertible du type cabriolet selon l'une des revendications 14 à 18, **caractérisé en ce que** l'élément de guidage d'écoulement d'air, dans la position inactive, peut être positionné sous un pavillon ou toit.

20. Véhicule convertible du type cabriolet selon l'une des revendications 14 à 19, **caractérisé en ce que** l'élément de guidage d'écoulement d'air (60'), dans la position inactive, est disposé sur une face du pare-brise (12).

21. Véhicule convertible du type cabriolet selon l'une des revendications précédentes, **caractérisé en ce que** derrière la rangée de sièges avant (32) de l'habitacle (14), est disposée une cloison formant paravent (90), derrière laquelle la portion d'écoulement d'air (24') guidée par l'élément de guidage d'écoulement d'air (60') retombe sur la carrosserie (10).

22. Véhicule convertible du type cabriolet selon la revendication 21, **caractérisé en ce que** la cloison formant paravent (90) est disposée derrière la rangée de sièges arrière (34).
